# EUROPEAN PATENT APPLICATION

(11) **EP 2 849 454 A1**
(43) Date of publication of application: **18.03.2015**
(21) Application number: 13382356.7
(22) Date of filing: 16.09.2013
(51) Int. Cl.: H04N 21/4545, H04N 21/475

(54) **Method, system and computer program products for providing an edited video signal to a viewer**

(71) Applicant: Telefonica Digital España, S.L.U., 28013 Madrid (ES)
(72) Inventor: Neystadt, John, 28013 Madrid (ES); Genud, Yinon, 28013 Madrid (ES)
(74) Representative: Carlos Hernando, Borja

(57) **Abstract**

The method comprising: determining a policy applicable to a viewer; obtaining relevant information of a received image or video signal received from a video source; editing at least part of images in said received video signal according to said policy; producing an edited video signal where at least part of images have been modified; and outputting said edited video signal to a viewer device.

The system and computer program products are configured to implement the proposed method.

## Description

### Technical Field of the Invention

The present invention generally relates to the field of real-time video communications or one way video transmission, and more specifically relates to a method, system and computer program product for providing an edited video signal appropriate to a viewer.

### Background of the Invention

Censorship is the suppression of speech or other public communication that may be considered objectionable, harmful, sensitive, or inconvenient as determined by a government, media outlet, or other controlling body. It can be done by governments and private organizations or by individuals who engage in self-censorship. It occurs in a variety of different contexts including speech, books, music, films, and other arts, the press, radio, television, and the Internet for a variety of reasons including national security, to control obscenity, child pornography, and hate speech, to protect children, to promote or restrict political or religious views, and to prevent slander and libel. That is particularly the case in Muslim countries where the rules of purdah (hijab) impose the physical veiling of women through coverings.

The issues associated with Internet censorship are similar to those for offline censorship of more traditional media. One difference is that national borders are more permeable online: residents of a country that bans certain information can find it on websites hosted outside the country. Thus censors must work to prevent access to information even though they lack physical or legal control over the websites themselves. This in turn requires the use of technical censorship methods that are unique to the Internet, such as site blocking and content filtering.

Unless the censor has total control over all Internet-connected computers, total censorship of information is very difficult or impossible to achieve due to the underlying distributed technology of the Internet. Technologically savvy users can often find ways to access blocked content. Nevertheless, blocking remains an effective means of limiting access to sensitive information for most users when censors are able to devote significant resources to building and maintaining a comprehensive censorship system.

Fogging is a type of visual censorship. An area for a picture or movie is blurred to obscure it from sight. This form of censorship is used for sexually related images/scenes. This form of editing also appears in television programs where an individual's face may not be shown due to legal or privacy concerns. As it does not contrast with the surrounding image very much, it is preferable over most other forms of censorship.

Pixelization is a form of fogging commonly used in editing images or video, whereby an image is blurred displaying part or all of it at a markedly lower resolution. It is primarily used for censorship. The effect is a standard graphics filter, available in all but the most basic bitmap graphics editors.

A familiar example of pixelization can be found in television news and documentary productions, in which vehicle license plates and faces of suspects at crime scenes are routinely obscured to maintain the presumption of innocence. Bystanders and others who do not sign release forms are also customarily pixelized. Footage of nudity is likewise obscured in some television broadcast programming. Pixelization may also be used to avoid unintentional product placement.

An alternative to pixelization is a black rectangular or square box (known as censor bars) that may be simply be used to occlude parts of images completely (for example, a black bar covering the eyes in lieu of the entire face being pixelized). A drawback of pixelization is that any differences between the large pixels can be exploited in moving images to reconstruct the original, unpixelized image; squinting at a pixelized, moving image can sometimes achieve a similar result. In both cases, integration of the large pixels over time allows smaller, more accurate pixels to be constructed in a still image result. Completely obscuring the censored area with pixels of a constant color or pixels of random colors escapes this drawback but can be more aesthetically jarring.

Prior art documents include examples such as patent EP 0720369 B1, which describes a system and method to provide real-time edit control for video program material. According to the invention, the viewer determines the rating of the program material he or she wishes to view. The video program material is provided in digital format and data are segmented into relatively short segments. Each segment is rated to indicate the content of that segment. Once the segment is rated, a tag is assigned to that segment to indicate the rating. Prior to viewing the movie, an editor examines the tag of each segment and determines whether that segment should be edited based on the tag. Thus, the viewer can watch an edited movie without viewing the materials that he or she finds objectionable. However, that patent application is fundamentally a flagging or control system, whose aim is to identify potentially disturbing images within a video program segment. Thus, the viewer can watch an edited movie without viewing the materials that he or she finds objectionable.

Also relevant prior art is the patent application EP 2086232 A1, which describes a system and method directed toward automatically identifying and filtering portions of multimedia content during the decoding process. Unlike other prior art's control of the input or source side of a decoder, this invention permits filtering multimedia content at the output side of a decoder. As a result, the invention may be practiced without necessarily imposing any particular requirements on the source of the multimedia content. When playback reaches a portion of the multimedia defined by a particular navigation object, the navigator activates the editing action assigned to that navigation object. For example, different types of filtering actions are a skip, mute and reframe. In cases where the visual information presented to the viewer only contains unsuitable material in a certain physical area of a scene, the multimedia content can be (reframed) enlarged if needed and then positioned in the viewing frame in a manner that effectively crops the objectionable information from view. Depending on the multimedia content, some of the editing and filtering actions described in this invention will modify substantially the appearance of the original image resulting in a user experience rather different from what the multimedia content producer wanted.

Further prior art examples, such as patent application US 20120236105 A1, provide solutions for changing an appearance of a user during a video call. Prior to making a call, a user identifies several images that can be used as morphing templates and also identifies a context where each template will be used. During a video call, a morphing template is then chosen based on a context of the call (e.g., time, place, caller identification, etc.). During the video call, the user's image will be morphed based on the chosen template. Because templates used for morphing will be easily changed based on a context of the call, the user will be provided with a simple technique to for morphing their image. The invention enables users to control how they appear in eyes of other viewers based on context of the conversation (unrelated to actual video stream). For example, a user may simply wish to be morphed into pajamas after a certain time of evening, or to have makeup placed on self when a certain individual calls without providing an image of them in pajamas. The same technique may be utilized to change the background of an image. For example, a user may wish to have their background appear as a workplace environment when a placing a work-related call. However, it is the caller user who controls his or her appearance to other viewers and this invention cannot control how viewers perceive other human subjects in a video call.

To overcome this shortcoming, image recognition and augmented reality systems, which aim at identifying potentially disturbing images in the video call, can be used.

### Summary of the Invention

Present invention solves the aforementioned problem by providing an automatic video overlay of objects and body parts or entire human figures, according to culture limitations, user-defined policy, controlled by parents or religious authority.

According to a first aspect the invention provides a method for providing an edited video signal to a viewer or user. The method as commonly used in the field is presented for real-time edit and control of a video signal received from at least one video source. On contrary of the known proposals, the method of the first aspect comprises the following steps:
a) determining a policy applicable to at least one viewer;
b) obtaining information of said received image or video signal;
c) editing at least part of images in said received video signal according to said determined policy;
d) producing an edited image or video signal where at least part of images have been modified;
e) outputting said edited video signal to at least one viewer device.

In one embodiment of the invention, the policy applicable to a viewer or user may be determined based on a user identification and authentication system that stores a user profile including user personal information such as age, gender, ethnicity, religion, etc. Proposed invention may comprise the additional step of matching a user characteristic from the user profile against a previously configured set of rules defining the applicable policy for said authenticated user.

One embodiment of the invention comprises extracting the relevant information from the received video signal using any known image recognition technique to detect objects, faces and other human body shapes, as required by said applicable policy.

As an additional step, the method may comprise at least two video sources, such as a videoconference between two users. In such cases, the method would be applied to each one of the video sources independently according to different policies if that were needed. Same original video source may be perceived different, because the editing may be different for each user participating at a videoconference.

An intermediate step in some embodiments of the invention may comprise an authorization process of any policy change by a given authority that may be a parent (family), or a person representing a religious or governmental institution.

A second aspect of the invention refers to a system providing an edited video signal to a viewer, comprising means for real-time edit and control of an image or video signal received from a video source. The system on contrary of the known proposals comprises:
- a video processor that can include: means for obtaining information of said received image or video signal; means for editing at least part of images in said received video signal according to a policy applicable to at least one viewer and for producing and edited image or video signal, being at least part of the images modified; and means to send the edited video signal to at least one viewer device; and
- a policy manager module configured to store a set of rules defining said applicable policy for said at least one viewer.

In one embodiment, the means for obtaining information can include an image analyzer that analyses the received image or video signal, preferably frame by frame, detecting objects, faces and other human body shapes, as required by said applicable policy.

In one embodiment, the means for editing and producing can include an image editor that at least filters, obscures and/or modifies, in real-time, at least part of the image as required by said applicable policy.

In one embodiment, the video processor may also comprise a module with a locking mechanism preventing the user from tampering with it and bypassing video processor. Preferably, in order to increase reliability, the viewing device will also include a locking mechanism for preventing said user tampering.

A last aspect of the invention refers to a computer program product comprising computer program code adapted to perform the method of the invention, when said program code is executed on a computer, a digital signal processor, a field-programmable gate array, an application-specific integrated circuit, a micro-processor, a micro-controller, or any other form of programmable hardware.

This technology can be embedded inside TV broadcasting programs, desktop and mobile Internet browsers, video on demand, live streaming systems, or any video capture wearable device with video processing capability (such as Google® glasses), enabling a viewer to traverse public spaces automatically editing certain objects in the captured video signal before being displayed on the viewer's device screen.

### Description of the Drawings

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

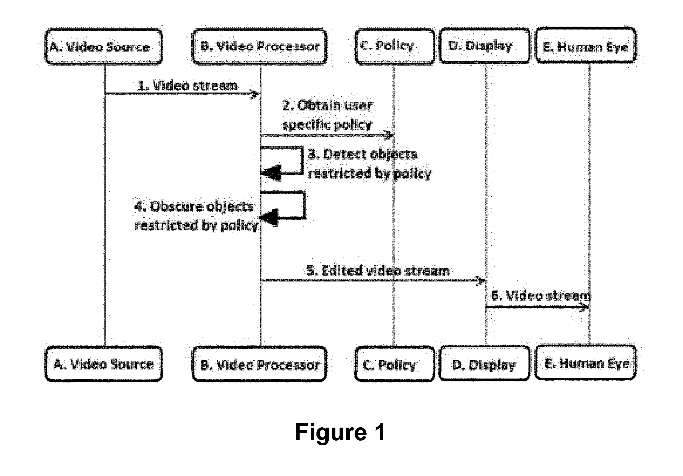

Figure 1 is a flow diagram illustrating the process followed by the proposed method according to an embodiment of the present invention.

### Detailed Description of the Invention

The invention describes a process, as seen in Figure 1, for in general terms, providing an edited video signal, such as an automatic video overlay of body parts or entire human figures, according to policy rules appropriate to the user viewing a video signal. A specific case of real-time editing and control, in this specific case, of a single video signal received from a video source is disclosed below in detail according to one embodiment of the invention. However, the method can be generalized for application to images or to a generic multiple video sources in ways evident to a person skilled in the art.

The method proposed in this invention would determine a policy applicable to a user.

Using basic authentication, biometric authentication, or any other known technique that must have previously been identified by a user.

A user-profiling database provides personal information about the user that may be used to select the applicable policy rules. Such personal information may include age, gender, ethnicity, religion, and other demographic characteristics.

In one embodiment of the invention, some of the user characteristics in the user profile will be automatically guessed by the system. For instance, gender, age and ethnicity could be recognized by the system applying image recognition techniques.

Policies may be self-defined by the user or by any other external authority. Proposed invention may comprise the additional step of matching a user characteristic from the user profile against a previously configured set of rules defining the applicable policy for said authenticated user. There may be a set of general policies applicable to all users and some other specifically targeted to a specific category of users.

The method of the invention, according to one particular embodiment, comprises defining policies as a set of rules with a predefined syntax:
IF <condition> APPLY <action> TO <shape>
   wherein
   - <condition> is a logical expression (true or false) related to user profiling characteristics and/or object recognized in the images received from video source;
   - <action> is a selected editing action to be applied that must be applied to all those parts of an image that matches a recognizable <shape>;
   - <shape> is a category of objects or human body parts, whose shape has been
recognized in an image by applying any known image recognition technique.
As an intermediate step in the method, taxonomy of recognizable parts of an image-shapes- is defined that it is used when specifying policy rules.

Some examples of policy rules may be:
1) Put scarf on women heads Above 18 years old, if viewer is Religious Jewish male above age 13
   IF (viewer.religion="Jewish" AND gender="male" AND age>13) AND (shape.gender = "women" and shape.age > 18)
   APPLY put_scarf
   SHAPE head
2) Put on Burka on all women to all Muslim males above age of 12 if viewer is male above 12 years old
   IF (viewer.religion="Muslim" AND viewer.gender="male" AND age>12) AND
   (shape.gender = "women" and shape.age > 12)
   APPLY put_burka
   SHAPE women
3) Obscure nudity to all viewers below age of 16
   IF (shape.age<16)
   APPLY obscure
   SHAPE nudity
4) Obscure all religious symbols, such as crosses to all Muslim or Jewish users
   IF viewer.religion=("Jewish" OR "Muslim")
   APPLY obscure
   SHAPE religious_symbol

These lists of edit and shape types are not intended to be exhaustive but they have to be seen as a particular embodiment of proposed invention to complement the summary of the invention without taking into account any limitation derived from this particular embodiment. Of course, different conditions and actions can be used for defining policy rules, without deviating from the spirit of the described invention.

After the policy rules applicable to the user have been determined, the method of invention performs certain actions on the video signal received from a video source depending on the editing actions specified in the policy rules to modify those shapes that may appear in each of the images from the video signal. In this particular embodiment, Figure 1, the actions that can be taken are:
- Receiving a video stream (video signal) from a video source
- Obtaining the set of rules (policy) applicable from policy store
- Analyze image of the video stream to recognize objects or human body shapes
- Apply image editing actions according to the policy rules applicable
- Send an edited version of the video stream to the user (viewer's device)

Throughout this document, the terms voice call, voice conversation and voice communication are used interchangeably to mean the synchronous communication of two or more parties through voice. All that is said about voice calls can be applied to video communications, considering the voice-only part of the video communication.

A non-exhaustive list of properties that could be recognized in the image received from a video source may include: Shape.Age, Shape.Gender, Shape.Ethnicity, Shape.HeadCovered, Shape.FaceCovered, Shape.ArmsCovered, Shape.NudityBreast, Shape.NudityFull, Shape.ShirtOn, Shape.Symbol.Cross, Shape.Symbol.Crescent, Shape.Symbol. DavidStar.

A non-exhaustive list of properties that could be recognized in the image of the viewer user include: Viewer.Age, Viewer.Gender, Viewer. Religion, Viewer.Location (country).

Generally, policy actions that would be applied on the image/s received from a video source in order to produce destination or final images or video would include, overlaying detected shape with different shapes, such as putting clothes, pixilation of the shape, coloring the shape, etc., over the area of source shape recognized.

Therefore, a non-exhaustive list of editing actions that could be performed in the received image may include: Cover Head, Cover Face, Cover Hands, Cover Legs, Cover Breasts, Cover Nudity Full, Obscure.Symbol.

The scope of the present invention is defined in the following set of claims.

## Claims

1. Method for providing an edited video signal to a viewer, said method comprising editing and controlling an image or video signal received from at least one video source in real-time, **characterized in that** the method comprises the following steps:
a) determining a policy applicable to at least one viewer;
b) obtaining information of said received image or video signal;
c) editing at least part of images in said received video signal according to said determined policy;
d) producing an edited image or video signal where at least part of images have been modified;
e) outputting said edited video signal to at least one viewer device.

2. The method of claim 1, comprising determining said applicable policy based on user authentication and user-profiling data.

3. The method of claim 1, comprising determining the applicable policy based on viewer image recognition techniques.

4. The method of claim 1, further comprising extracting the relevant information from the received video signal using an image recognition technique to detect objects, faces and/or other human body shapes.

5. Method according to previous claims, wherein the policy to be applied is the most restrictive of the policies applicable to multiple viewers.

6. System for providing an edited video signal to a viewer, comprising means for real-time edit and control of an image or video signal received from at least one video source, the system being **characterized in that** comprises:
- a video processor comprising:
- means to obtain information of said received image or video signal;
- means to editing at least part of images in said received video signal according to a policy applicable to at least one viewer and to produce and edited image or video signal, being at least part of the images modified; and
- means to send the edited video signal to at least one viewer device; and
- a policy manager module configured to store a set of rules defining said applicable policy for said at least one viewer.

7. System according to claim 6, wherein said means for obtaining information comprises an image analyzer that analyses the received image or video signal, frame by frame, detecting objects, faces and other human body shapes, as required by said applicable policy.

8. System according to claim 6, wherein said means for editing and producing comprises an image editor that at least filters, obscures and/or modifies, in real-time, at least part of the image as required by said applicable policy.

9. System according to claim 6, wherein said video processor further comprises a module including a locking mechanism for preventing the at least one viewer from tampering with it and bypassing the video processor.

10. A computer program product comprising a computer program code means adapted to perform all the steps of claim 1 when said program code is executed on a computer, a digital signal processor, a field-programmable gate array, an application-specific integrated circuit, a micro-processor, a micro-controller, or any other form of programmable hardware.

11. A computer program product according to claim 10, further comprising computer program code means adapted to perform claim 2 when said program code is executed on a computer, a digital signal processor, a field-programmable gate array, an application-specific integrated circuit, a micro-processor, a micro-controller, or any other form of programmable hardware.
